# EUROPEAN PATENT APPLICATION

(11) **EP 4 715 940 A1**
(43) Date of publication of application: **25.03.2026**
(21) Application number: 25184259.7
(22) Date of filing: 20.06.2025
(51) Int. Cl.: H01M 10/0567, H01M 10/0569, H01M 4/38, H01M 10/0525, H01M 10/0566, H01M 10/0568

(54) **ELECTROLYTE AND SECONDARY BATTERY**

(30) Priority: 23.08.2024 CN 202411172073
(71) Applicant: AESC Japan Ltd., Yokohama-Shi, Kanagawa 220-0012 (JP)
(72) Inventor: YU, Le, Pudong New Area Shanghai 201315 (CN); SHI, Lei, Pudong New Area Shanghai 201315 (CN)
(74) Representative: Becker, Eberhard

(57) **Abstract**

Provided are an electrolyte and a secondary battery. The electrolyte includes a lithium salt and a solvent. The solvent includes ethylene carbonate, propylene carbonate, fluorinated ethylene carbonate, and linear carbonate. A mass percentage of the ethylene carbonate relative to the solvent is 2% to 10%. A sum of a mass of the propylene carbonate and the fluorinated ethylene carbonate relative to the mass percentage of the solvent is 10% to 30%. The electrolyte may well match batteries with high working voltage, while ensuring that the initial impedance of the battery does not deteriorate, effectively improving the issues of poor cycle performance and large cycle gas generation of the battery.

## Description

### BACKGROUND

### Technical Field

The disclosure belongs to a field of secondary battery technology, and in particular to an electrolyte and a secondary battery.

### Description of Related Art

Lithium-ion batteries are widely used in consumer electronics, power vehicles, and energy storage fields due to the advantages of long cycle lifespan, high working voltage, low self-discharge rate, no memory effect, and environmental friendliness. In the aforementioned application fields, people's demand for battery endurance is increasing, and there is an urgent need for batteries with higher energy density.

In order to increase the energy density of batteries, the positive electrode active material is developing towards high energy density and high charging voltage. However, as the activity of the positive electrode active material increases, the stability of the positive electrode active material becomes worse, manifested as enhanced oxidation on the surface of the positive electrode active material. The existing electrolyte is difficult to adapt to a secondary battery with a high working voltage as the electrolyte is prone to side reactions with the positive electrode active material at high voltage, which causes the surface lattice of the positive electrode active material to collapse and release oxygen, thereby resulting in cycle lifespan degradation and increased cycle gas generation of the battery.

Currently, the industry lacks a systematic understanding of the cycle gas generation of the high energy density battery, and the solutions are relatively scarce. There is an urgent need to develop an electrolyte that is compatible with the high energy density positive electrode to effectively solve the aforementioned technical issues.

### SUMMARY

Given the drawbacks of the aforementioned existing technology, the disclosure provides an electrolyte and a secondary battery to improve the technical problem of existing electrolytes easily undergoing side reactions with positive electrode active materials in high working voltage batteries, causing cycle lifespan degradation and cycle gas generation deterioration in the battery, while ensuring the conductivity performance of the electrolyte.

To achieve the aforementioned purpose and other related purposes, the disclosure provides an electrolyte including a lithium salt and a solvent. The solvent includes ethylene carbonate, propylene carbonate, fluorinated ethylene carbonate, and linear carbonate. A mass percentage of the ethylene carbonate relative to the solvent is 2% to 10%. A mass percentage of a sum of the propylene carbonate and the fluorinated ethylene carbonate relative to the solvent is 10% to 30%.

In an example of the disclosure, a mass percentage of the fluorinated ethylene carbonate relative to the solvent is 0.5% to 3%.

In an example of the disclosure, the electrolyte further includes an additives, and the additive includes 1,3-propane sultone and ethylene sulfate.

In an example of the disclosure, a mass percentage of the 1,3-propane sultone relative to the electrolyte is equal to or less than 0.5%, and a mass percentage of the ethylene sulfate relative to the electrolyte is equal to or greater than 0.8%.

In an example of the disclosure, the mass percentage of the ethylene sulfate relative to the electrolyte is 0.8% to 1%.

In an example of the disclosure, the linear carbonate includes one or more of dimethyl carbonate, diethyl carbonate, or ethyl methyl carbonate.

The disclosure also provides a secondary battery including a positive electrode sheet, a negative electrode sheet, a separator, and the electrolyte according to any one of the aforementioned examples.

In an example of the disclosure, an upper limit of a working voltage of the secondary battery is 4.15V or above.

In an example of the disclosure, the negative electrode sheet includes a negative electrode active material, the negative electrode active material includes a silicon material, and a mass percentage of the silicon material in the negative electrode active material is equal to or less than 5%. In the electrolyte, the mass percentage of the fluorinated ethylene carbonate relative to the solvent is 0.5% to 3%.

In an example of the disclosure, the electrolyte further includes an additive, the additive includes 1,3-propane sultone and ethylene sulfate, a mass percentage of the 1,3-propane sultone relative to the electrolyte is equal to or less than 0.5%, and a mass percentage of the ethylene sulfate relative to the electrolyte is equal to or greater than 0.8%.

The electrolyte provided by the disclosure adjusts the contents of components in the electrolyte, by reducing the components with the poorest oxidation resistance in the electrolyte (that is, the ethylene carbonate), to improve the oxidation resistance and electrochemical stability of the electrolyte. Thereby, the probability of side reactions between the electrolyte and the positive electrode active material at high voltage may be reduced, and the issue of the gas generation of the cycle of the battery may be improved. At the same time, the electrolyte optimizes the contents of other alternative components (the propylene carbonate and the fluorinated ethylene carbonate) to compensate for the decrease in dielectric constant and electrical conductivity caused by the reduction of ethylene carbonate, ensuring that the lithium ion transport capacity of the electrolyte and the film-forming effect on the negative electrode interface do not deteriorate, thereby ensuring the cycling performance of the battery. This electrolyte may well match batteries with high working voltage, effectively improving the issues of poor cycle performance and large cycle gas generation of the battery while ensuring that the initial impedance of the battery does not deteriorate.

### DESCRIPTION OF THE EMBODIMENTS

The implementation manner of the disclosure is illustrated through specific examples below, and persons skilled in the art may easily understand other advantages and effects of the disclosure from the content disclosed in this specification. The disclosure may also be implemented or applied through other different specific embodiments, and various modifications or changes may be made to the details in this specification based on different perspectives and applications, without departing from the spirit of the disclosure. It should be noted that, in the absence of conflict, the features in the following embodiments and in the embodiments may be combined with each other. It should also be understood that the terms used in the embodiments of the disclosure are for describing specific embodiments and not for limiting the scope of protection of the disclosure. For test methods where specific conditions are not specified in the following examples, they are generally conducted under conventional conditions, or according to conditions recommended by various manufacturers.

For simplicity, this document explicitly discloses only some numerical ranges, with each point or single value between the range endpoints included in that range. Thus, each point or single value may serve as its own lower or upper limit and may be combined with any other point or single value or with other lower or upper limits to form ranges not explicitly recorded. It should be noted that in the disclosure, the content of each component in the electrolyte represents the mass percentage of that component relative to the solvent or electrolyte.

Through research, the inventors have found that in current secondary battery with a high energy density positive electrode (such as a lithium-ion battery with a high-nickel ternary positive electrode system), the used electrolyte generally including a large amount of additives stabilizes the positive electrode interface, thereby reducing side reactions between the electrolyte and the positive electrode active material. However, the additives capable of stabilizing the positive electrode interface generally have a characteristic of high impedance, causing a negative impact on the conductivity of the electrolyte. Although the electrolyte applied in existing technology may suppress cycle gas generation of the battery, the electrolyte also cause a decrease in direct current resistance (DCR) and cycle capacity of the battery.

Given this urgency, the disclosure provides an electrolyte. The electrolyte enhances oxidation resistance and electrochemical stability by reducing a content of ethylene carbonate, which has the poorest oxidation resistance in a conventional solvent, thereby reducing side reactions between the electrolyte and a positive electrode active material under high voltage and improving the issue of the cycle gas generation of the battery. Meanwhile, the electrolyte further appropriately increases contents of alternatives such as propylene carbonate and fluorinated ethylene carbonate to compensate for the decrease in dielectric constant and conductivity caused by the reduced content of ethylene carbonate, ensuring that a lithium ion transport capability of the electrolyte and a film-forming effect on a negative electrode interface do not deteriorate to maintain the cycling performance of the battery. Unlike the existing method that requires adding large amounts of high-impedance additives to the electrolyte to suppress cycle gas generation of the battery, this electrolyte does not need to rely on the high-impedance additives to stabilize the positive electrode active material interface, and thus may simultaneously improve the issues of the cycle lifespan and cycle gas generation of the battery at high operating voltage while ensures that the initial impedance of the battery does not deteriorate.

The aforementioned electrolyte includes a lithium salt and a solvent. The solvent includes ethylene carbonate (EC), propylene carbonate (PC), fluorinated ethylene carbonate (FEC), and linear carbonate.

A mass percentage of the EC relative to the solvent may be any value in a range of 2% to 10%, for example, 2%, 3%, 4%, 5%, 6%, 7%, 8%, 9%, or 10%. The small amount of the EC added to the solvent may enhance the oxidation resistance capability of the electrolyte at a high temperature and high voltage, while also ensuring a film-forming effect of a solid electrolyte interphase (SEI) on a negative electrode surface. If the content of the EC in the solvent is too high, the oxidation stability of the electrolyte may be reduced, which causes more side reactions in the positive electrode and the cycle gas generation deterioration in the battery. If the content of the EC in the solvent is too low, the conductivity of the electrolyte may be reduced, which affects the kinetic performance of the electrolyte, and results in insufficient formation of the SEI film on the negative electrode surface. Therefore, solvent co-intercalation occurs in charging and discharging, leading to an abnormal charge-discharge cycle and abnormal cycle gas generation of the battery.

A mass percentage of a sum of the PC and the FEC relative to the solvent may be any value in a range of 10% to 30%, for example, 10%, 13%, 15%, 17%, 20%, 23%, 25%, 27%, or 30%. An appropriate addition amount of the PC and the FEC in the solvent may serve as alternative components to the EC, compensating for the decrease in dielectric constant and conductivity caused by the reduced amount of the EC, which ensures that the lithium ion transport capability of the electrolyte and the film-forming effect of the negative electrode interface do not deteriorate.

In some embodiments, a mass percentage of the PC relative to the solvent may be any value in a range of 7% to 27%, for example, 7%, 10%, 13%, 15%, 17%, 20%, 23%, 25%, or 27%. An appropriate amount of the PC in the solvent may both ensure the conductivity performance of the electrolyte and reduce the risk of damage to the negative electrode. When the content of the PC in the solvent is too low, the dielectric constant of the electrolyte decreases, and the conductivity decreases, which causes the negative impact on the charge-discharge cycle of the battery. When the content of the PC in the solvent is too high, excessive PC has difficulty forming an SEI film on a surface of a carbon negative electrode active material, and also undergoes continuous reductive decomposition with the surface of the carbon negative electrode active material at a low voltage, which increases the risk of the electrolyte depriving the negative electrode active material, and affects the cycle lifespan and cycle gas generation of the battery.

In some embodiments, a mass percentage of the FEC relative to the solvent may be any value in the range of 0.5% to 3%, for example, 0.5%, 0.7%, 1%, 1.2%, 1.4%, 1.5%, 1.7%, 2%, 2.2%, 2.4%, 2.5%, 2.7%, or 3%. An appropriate amount of the FEC in the solvent may both ensure the protective effect of the electrolyte on the negative electrode interface and control the cycle gas generation of the battery. When the content of the FEC in the solvent is too high, excessive FEC easily decomposes at the high temperature to produce hydrogen fluoride, which causes increase in cycle gas generation of the battery. When the content of the FEC in the solvent is too low, insufficient FEC may not function to form a film to protect the negative electrode, which easily causes the PC to intercalate into the carbon negative electrode active material and destroys the cycle stability of the battery.

In some embodiments, the electrolyte further includes an additive. The additive includes 1,3-propane sultone (PS) and ethylene sulfate (DTD). The additive helps form a stable SEI film on the negative electrode interface, further improving the film-forming effect of the electrolyte on the negative electrode interface, enhancing the protective effect on the negative electrode interface, and improving the charge-discharge cycle performance of the battery.

In some embodiments, a mass percentage of the PS relative to the electrolyte may be equal to or less than 0.5%, for example, 0.1%, 0.2%, 0.3%, 0.4%, or 0.5%. Optionally, the mass percentage of the PS relative to the electrolyte may be 0.5%. When a content of the PS in the electrolyte is within the aforementioned range, the formation of the SEI film may be promoted at the negative electrode interface while no other negative effects occur on the cycle performance of the battery.

In some embodiments, a mass percentage of the DTD relative to the electrolyte may be equal to or greater than 0.8%, for example, 0.8%, 0.9%, 1%, 1.2%, or 1.5%. The DTD needs to have a sufficient content in the electrolyte. If the content of the DTD in the electrolyte is too low, insufficient formation of the SEI film may develop on the negative electrode interface, which causes the negative effect on the cycle lifespan and cycle gas generation of the battery.

Furthermore, in an example, a mass percentage of the DTD relative to the electrolyte may be any value in the range of 0.8% to 1%, for example, 0.8%, 0.85%, 0.9%, 0.95%, or 1%.

In some embodiments, the linear carbonate includes one or more of dimethyl carbonate (DMC), diethyl carbonate (DEC), or ethyl methyl carbonate (EMC). That is, the linear carbonate may be any one of the types listed above, for example, the DMC, the DEC, or the EMC. The linear carbonate may further be a combination of any two or three of the types listed above, for example, a combination of the DMC and the DEC, or a combination of the DEC and the EMC, or a combination of the DMC, the DEC, and the EMC. Optionally, in an example, the linear carbonate includes the DMC and the EMC. It should be noted that when the linear carbonate is a combination, there is no restriction on the ratio between the components within the combination, which may be mixed in any ratio.

In addition, it should be noted that the lithium salt in the electrolyte may be chosen from conventional types of lithium salts in the art. As an example, the lithium salt is selected from one or more of lithium hexafluorophosphate (LiPF₆), lithium bis(fluorosulfonyl)imide (LiFSI), lithium tetrafluoroborate (LiBF₄), lithium bis(oxalate)borate (LiBOB), lithium difluoro(oxalate)borate (LiODFB), and lithium bis(trifluoromethylsulfonyl)imide (LiTFSI). Preferably, the lithium salt may be selected from LiPF₆ with better comprehensive performance, or mainly LiPF₆ with appropriate addition of other lithium salts to take advantages and enhance the performance of the electrolyte. The concentration of the lithium salt may be set according to conventional types in the art. In some embodiments, a mass percentage of the lithium salt in the electrolyte may be 8% to 20%. Furthermore, the mass percentage of the lithium salt in the electrolyte may be any value in the range of 10% to 17%, for example, 10%, 13%, 14%, 15%, or 17%.

The electrolyte of the disclosure may be prepared according to conventional preparation methods. For example, the electrolyte is prepared in a glove box with argon or nitrogen content of 99.999%, an actual oxygen content of 0.1 ppm, and a moisture content lower than 10 ppm. In the glove box, the solvent is mixed and stirred, then the lithium salt is added to the mixed solvent under a stirring condition, and the stirring is continued until the lithium salt is completely dissolved. Finally, the additive is added and stirred thoroughly.

The disclosure further provides a secondary battery. The secondary battery includes a positive electrode sheet, a negative electrode sheet, a separator, and the electrolyte according to any one of the embodiments described above. During the charge-discharge process of the battery, the lithium ions shuttle between the positive electrode sheet and the negative electrode sheet for intercalation and deintercalation, the separator is placed between the positive electrode sheet and the negative electrode sheet, serving a function of isolation, and the electrolyte serves a function of conducting the lithium ions between the positive electrode sheet and negative electrode sheet.

The composition and preparation method of the secondary battery are specifically described below.

The positive electrode sheet includes a positive electrode current collector and a positive electrode active material layer disposed on at least one surface of the positive electrode current collector. The positive electrode current collector may be, for example, a foil formed after surface treatment of nickel, titanium, aluminum, nickel, silver, stainless steel, or carbon. Besides foils, the positive electrode current collector may further be used in any one or a combination of various forms such as film, mesh, porous, foam, or non-woven fabric. A thickness of the positive electrode current collector is, for example, 8µm-15µm. In an embodiment, the positive electrode current collector is, for example, an aluminum foil with a thickness of 13µm. The positive electrode current collector has two opposite surfaces in a thickness direction thereof. The positive electrode active material layer is disposed on either one or both of the two opposite surfaces of the positive electrode current collector. The positive electrode active material layer includes a positive electrode active material, a positive electrode conductive agent, and a positive electrode binder. There are no specific limitations on the positive electrode active material, the positive electrode conductive agent, and the positive electrode binder, and persons skilled in the art may make a choice according to actual requirements.

As an example, the positive electrode active material may be chosen from a ternary material, a lithium-containing phosphate, and a spinel material. The ternary material includes a lithium nickel cobalt manganese oxide, a lithium nickel cobalt aluminum oxide, a lithium nickel cobalt manganese oxide doped with metal ions, and a lithium nickel cobalt aluminum oxide doped with metal ions. The lithium-containing phosphate includes a manganese iron lithium phosphate, a lithium iron phosphate, and a lithium manganese phosphate. The positive electrode binder is chosen from polyvinylidene fluoride (PVDF) or polytetrafluoroethylene (PTFE). The positive electrode conductive agent is chosen from one or a combination of two or more compounds mixed in any proportion from carbon black, acetylene black, graphene, carbon nanotubes, and carbon nanofibers.

The negative electrode sheet includes a negative electrode current collector and a negative electrode active material layer disposed on at least one surface of the negative electrode current collector. The negative electrode current collector may use materials with good conductivity and mechanical strength, for example, copper foil. The negative electrode current collector has two opposite surfaces in the thickness direction thereof. The negative electrode active material layer is disposed on either one or both of the two opposite surfaces of the negative electrode current collector. The negative electrode active material layer includes a negative electrode active material, a negative electrode conductive agent, a negative electrode binder, and a thickener. There are no specific limitations on the specific types of negative electrode active material, negative electrode conductive agent, and negative electrode binder. The materials known in the art that is able to be used in lithium-ion batteries may be used. Persons skilled in the art may make a choice according to actual requirements.

As an example, the negative electrode active material is chosen from one or more combinations of a carbon materials and a silicon material. The carbon material includes, for example, hard carbon, artificial graphite, and natural graphite. The silicon material includes, for example, elemental silicon, silicon oxide compounds, and silicon carbon compounds. The negative electrode conductive agent is chosen from one or a combination of two or more compounds mixed in any proportion from carbon black, acetylene black, graphene, carbon nanotubes, and carbon nanofibers. The negative electrode binder is chosen from any one of polyacrylic acid (PAA), sodium polyacrylate (PAAS), polyacrylamide (PAM), polyvinyl alcohol (PVA), and polymerized styrene butadiene rubber (SBR) or several compounds mixed in any proportion. The thickener is chosen from carboxymethyl cellulose such as CMC-Na or CMC-Li.

The separator is chosen from conventional types in the art. For example, polyethylene (PE) or polypropylene (PP) porous films may be chosen as the separator. A thickness of the separator is 9 to 18µm. An air permeability of the separator is 180s/100mL to 380s/100mL. A porosity of the separator is 30% to 50%.

The battery is assembled according to conventional methods. For example, after preparation is completed, the negative electrode sheet, the separator, and the positive electrode sheet are stacked in sequence, and placed into an aluminum-plastic film to obtain a dry cell, and the dry cell is heated at 80°C to remove water. The prepared electrolyte is injected into the dry cell and sealed to obtain the finished lithium-ion battery.

In some embodiments, the upper limit of a working voltage of the secondary battery is greater than or equal to 4.15V. For example, in an example, the working voltage of the secondary battery is 2.5V to 4.25V. Since the upper limit of the working voltage of the secondary battery is mainly determined by the positive electrode active material, the positive electrode active material in this embodiment may be chosen from conventional high energy density positive electrode materials in the art, such as a high-nickel ternary material or a nickel-manganese spinel material. The high-nickel ternary material is LiNiₐCo_{b}M_{1-a-b}O₂, 0.9≤a<1, 0<b≤0.1, and the M element is chosen from at least one of Mn, Al, Ti, Zr, Cu, Ca, Ta, and Mg. For example, the high-nickel ternary material may be LiNi_{0.9}Co_{0.05}Mn_{0.05}O₂.

Taking the high-nickel ternary material as an example, as a content of the nickel in the positive electrode active material increases, the stability of the positive electrode becomes worse, which causes enhancement on oxidation of the surface of the positive electrode and increase in catalytic activity. During the charge-discharge cycle of the battery, the positive electrode active material easily undergoes side reactions with the electrolyte, causing an interface lattice of the positive electrode to collapse and release oxygen. However, in this embodiment, the electrolyte, based on a good electrical conductivity and the anti-oxidation resistance ability thereof at the high temperature and high voltage, may well adapt to the secondary battery with the high energy density positive electrode system. While ensuring the electrical conductivity of the battery, the probability of side reactions with the positive electrode active material in the environment of the high voltage of greater than 4V may be effectively reduced, thereby effectively suppressing the increase in the cycle gas generation of the battery, increasing the cycle lifespan of the battery, and simultaneously ensuring that the initial impedance of the battery does not deteriorate.

In some embodiments, the negative electrode active material is a composite of graphite and silicon material. The silicon material includes at least one of elemental silicon, silicon oxide compound, and silicon-carbon composite. The silicon oxide compound may be SiOₓ(0<x<2). A mass percentage of the silicon material in the negative electrode active material is less than or equal to 5%, for example, 1%, 2%, 3%, 4%, or 5%.

In the aforementioned embodiment, as a content of the silicon material in the negative electrode active material increases, potential to increase volume expansion of the negative electrode sheet occurs during the charge-discharge cycle of the battery. By adding appropriate amount of the FEC in the electrolyte, the SEI film is continuously formed on the interface of the negative electrode active material to avoid exposure of the negative electrode in the electrolyte due to excessive expansion destroying the original SEI film on the interface, thereby achieving protection of the negative electrode during the cycle of the battery. In an example, a mass percentage of the FEC relative to the solvent is 0.5% to 3%.

In addition, in the aforementioned embodiment, the electrolyte further helps form a stable SEI film at the negative electrode interface through the components of the additive, enhancing the film formation effect of the electrolyte at the negative electrode interface, strengthening the protection effect on the negative electrode interface, and improving the performance of the charge-discharge cycle of the battery. The additive includes PS and DTD. A mass percentage of the PS relative to the electrolyte is less than or equal to 0.5%. A mass percentage of the DTD relative to the electrolyte is greater than or equal to 0.8%. Optionally, in an example, a mass percentage of the DTD relative to the electrolyte is 0.8% to 1%.

The technical solution of the disclosure is explained in detail through several specific examples and comparative examples below. Unless otherwise specified, the raw materials and reagents used in the following embodiments are all commercially available products, or may be prepared through conventional methods in the art.

### Example 1

This example provides a secondary battery. The composition and preparation method of the secondary battery are as follows.

### Preparation of electrolyte

In the glove box having argon with the moisture content lower than 10 ppm, the EC, the PC, the EMC, the DEC, the FEC of the battery-grade were mixed according to a mass ratio of 10:10:57:20:3 to form a solvent. In the prepared solvent, with the total mass of the solvent as 100%, the EC accounts for 10% mass of the solvent, the PC accounts for 10% mass of the solvent, the EMC accounts for 57% mass of the solvent, the FEC accounts for 3% mass of the solvent, and the DEC accounts for 20% mass of the solvent. Afterwards, a certain mass of LiPF₆ was weighed as the main lithium salt and added to the aforementioned mixed solvent. Finally, a certain amount of the PS and the DTD were added as additives, and then mixed uniformly to obtain the electrolyte. As shown in Table 1, with the total mass of the electrolyte as 100%, LiPF6 accounts for 14% mass of the electrolyte, the PS accounts for 0.5% mass of the electrolyte, and the DTD accounts for 1% mass of the electrolyte. In addition, by calculation, the total amount of solvent accounts for 84.5% mass of the electrolyte.

### Preparation of positive electrode sheet

The positive electrode active material LiNi_{0.9}Co_{0.05}Mn_{0.05}O₂, the positive electrode conductive agent Super P, and the positive electrode binder PVDF were mixed according to a mass ratio of 98:1:1, and the solvent N-methyl pyrrolidone was added. Under a function of a vacuum mixer, the mixture was stirred until homogeneous and transparent to obtain a positive electrode slurry. The positive electrode slurry was uniformly coated on an aluminum foil. The aluminum foil was dried at a room temperature and then transferred to an oven for drying, followed by cold pressing and cutting to obtain the positive electrode sheet.

### Preparation of negative electrode sheet

The negative electrode active material, the negative electrode conductive agent Super P, the negative electrode thickener CMC-Na, and the negative electrode binder SBR were mixed according to a mass ratio of 96:1:1:2. Under the function of the vacuum mixer, the mixture was stirred until uniform to obtain a negative electrode slurry. The negative electrode slurry was uniformly coated on a copper foil of the negative electrode current collector. The copper foil was dried at the room temperature and then transferred to the oven for drying, followed by cold pressing and cutting to obtain the negative electrode sheet. The negative electrode active material includes artificial graphite and silicon oxide compound SiOₓ(0<x<2). The artificial graphite accounts for 97% mass percentage of the negative electrode active material. The silicon oxide compound accounts for 3% mass percentage of the negative electrode active material.

### Selection of separator

A PP film with a thickness of 12µm was used as the separator.

### Preparation of battery

The positive electrode sheet, the separator, and the negative electrode sheet were stacked in sequence, with the separator positioned between the positive electrode sheet and the negative electrode sheet to serve as isolation, to obtain a bare cell. Afterwards, the bare cell was wrapped with an aluminum-plastic film, transferred to the vacuum oven, dried at 120°C, injected with the electrolyte at 3.0g/Ah, sealed, and subjected to electrolyte formation to obtain a lithium-ion secondary battery with a capacity of 1Ah.

### Example 2

The present embodiment provides a secondary battery with the same system as Example 1. The difference between this example and Example 1 lies in adjusting a mass percentage of the EC, the PC, and the FEC in the solvent to 2%, 10%, and 3%, and adaptively adjusting a content of the EMC to maintain the total amount of the electrolyte the same as in Example 1.

### Example 3

The present embodiment provides a secondary battery with the same system as Example 1. The difference between this example and Example 1 lies in adjusting a mass percentage of the EC, the PC, and the FEC in the solvent to 10%, 7%, and 3%, and adaptively adjusting a content of the EMC to maintain the total amount of the electrolyte the same as in Example 1.

### Example 4

The present embodiment provides a secondary battery with the same system as Example 1. The difference between this example and Example 1 lies in adjusting a mass percentage of the EC, the PC, and the FEC in the solvent to 5%, 27%, and 3%, and adaptively adjusting a content of the EMC to maintain the total amount of the electrolyte the same as in Example 1.

### Example 5

The present embodiment provides a secondary battery with the same system as Example 1. The difference between this embodiment and Example 1 lies in adjusting a mass percentage of the EC, the PC, and the FEC in the solvent to 10%, 10%, and 0.5%, and adaptively adjusting a content of the EMC to maintain the total amount of electrolyte the same as in Example 1.

### Example 6

The present embodiment provides a secondary battery with the same system as Example 1. The difference between this example and Example 1 lies in adjusting a mass percentage of the DTD relative to the electrolyte to 0.8% in the electrolyte.

### Example 7

The present embodiment provides a secondary battery with the same system as Example 1. The difference between this example and Example 1 lies in adjusting the mass percentage of the silicon oxide compound in the negative electrode active material to 5%.

### Comparative Example 1

This comparative example provides a secondary battery with the same system as Example 1. The difference between this comparative example and Example 1 lies in not adding the EC to the solvent, adjusting a mass percentage of the PC, the DEC, and the FEC in the solvent to 10%, 20%, and 3%, and adaptively adjusting a content of the EMC to maintain the total amount of the electrolyte the same as in Example 1.

### Comparative Example 2

This comparative example provides a secondary battery with the same system as Example 1. The difference between this comparative example and Example 1 lies in adjusting the mass percentage of the EC, the DEC, and the FEC in the solvent to 15%, 10%, and 3%, and adaptively adjusting a content of the EMC to maintain the total amount of the electrolyte the same as in Example 1.

### Comparative Example 3

This comparative example provides a secondary battery with the same system as Example 1. The difference between this comparative example and Example 1 lies in adjusting a mass percentage of the EC, the PC, and the FEC in the solvent to 10%, 5%, and 3%, and adaptively adjusting a content of the EMC to maintain the total amount of the electrolyte the same as in Example 1.

### Comparative Example 4

This comparative example provides a secondary battery with the same system as Example 1. The difference between this comparative example and Example 1 lies in adjusting a mass percentage of the EC, the PC, and the FEC in the solvent to 10%, 30%, and 3%, and adaptively adjusting a content of the EMC to maintain the total amount of the electrolyte the same as in Example 1.

### Comparative Example 5

This comparative example provides a secondary battery with the same system as Example 1. The difference between this comparative example and Example 1 lies in not adding the FEC to the solvent, adjusting a mass percentage of the EC and the PC in the solvent to 10% and 10%, and adaptively adjusting a content of the EMC to maintain the total amount of the electrolyte the same as in Example 1.

### Comparative Example 6

This comparative example provides a secondary battery with the same system as Example 1. The difference between this comparative example and Example 1 lies in adjusting a mass percentage of the EC, the PC, and the FEC in the solvent to 10%, 10%, and 5%, and adaptively adjusting a content of EMC to maintain the total amount of the electrolyte the same as in Example 1.

### Comparative Example 7

This comparative example provides a secondary battery with the same system as Example 1. The difference between this comparative example and Example 1 lies in adjusting a mass percentage of the DTD relative to the electrolyte to 0.5% in the electrolyte.

### Comparative Example 8

This comparative example provides a secondary battery with the same system as Example 1. The difference between this comparative example and Example 1 lies in adjusting a mass percentage of the PS relative to the electrolyte to 1% in the electrolyte.

### Comparative Example 9

This comparative example provides a secondary battery with the same system as Example 1. The difference between this comparative example and Example 1 lies in adjusting a mass percentage of the silicon oxide compound in the negative electrode active material to 6%.

### Comparative Example 10

This comparative example provides a secondary battery with the same system as Example 1. The difference between this comparative example and Example 1 lies in not adding the PC to the solvent, adjusting a mass percentage of the EC and the FEC in the solvent to 30% and 3%, and adaptively adjusting a content of the EMC to maintain the total amount of the electrolyte the same as Example 1.

Performance tests were conducted on the secondary batteries provided in Examples 1 to 9 and Comparative Examples 1 to 10. The battery parameters of Examples 1 to 9 and Comparative Examples 1 to 10 are shown in Table 1, and the test results are shown in Table 2. The test methods are as follows.

### (1) Direct current resistance (DCR) test of battery

In the oven at a specified temperature (a high temperature of 45°C), the secondary battery is discharged to 50% SOC (State Of Charge) at a 1C rate current, and then continued to discharge at a 4C rate current for 30 seconds. The difference between the updated stable voltage and the original platform voltage is detected. A ratio of this value to the 4C current value is the DCR of the battery. After the first full charge of the battery, the result of the DCR test is the initial DCR of the battery.

### (2) Cycle lifespan test of battery

In the oven at the specified temperature (the high temperature of 45°C), the charge-discharge cycle of the battery is conducted at 1C rate current within a range of a test voltage of 2.5V (discharge cut-off voltage) to 4.25V (charge cut-off voltage). The discharge capacity of the battery for each cycle is recorded. The test ends when the cycle capacity of the battery reaches 90% of the first cycle capacity, and the cycle number of the battery is recorded.

### (3) Cycle gas generation test of battery

In the oven at the specified temperature (the high temperature of 45°C), the charge- discharge cycle is conducted at 1C rate current within the range of the test voltage of 2.5V (discharge cut-off voltage) to 4.25V (charge cut-off voltage). The discharge capacity of the battery for each cycle is recorded. The test ends when the cycle capacity of the battery reaches 90% of the first cycle capacity. The volume change of the battery before and after cycling is recorded, and the volume growth rate of the battery is calculated as = (volume after cycling - volume before cycling)/volume before cycling, with the volume growth rate of the battery serving as the measurement index for the cycle gas generation.

**Table 1: Electrolyte and components of negative electrode active material in Examples 1 to 7 and Comparative Examples 1 to 10**

| Group | Percentage of components in solvent | | | Percentage of additive in electrolyte | | Percentage of negative electrode silicon compound |
|---|---|---|---|---|---|---|
| | EC | PC | FEC | DTD | PS | |
| Example 1 | 10% | 10% | 3% | 1% | 0.5% | 3% |
| Example 2 | 2% | 10% | 3% | 1% | 0.5% | 3% |
| Example 3 | 10% | 7% | 3% | 1% | 0.5% | 3% |
| Example 4 | 5% | 27% | 3% | 1% | 0.5% | 3% |
| Example 5 | 10% | 10% | 0.5% | 1% | 0.5% | 3% |
| Example 6 | 10% | 10% | 3% | 0.8% | 0.5% | 3% |
| Example 7 | 10% | 10% | 3% | 1% | 0.5% | 5% |
| Comparative Example 1 | 0% | 10% | 3% | 1% | 0.5% | 3% |
| Comparative Example 2 | 15% | 10% | 3% | 1% | 0.5% | 3% |
| Comparative Example 3 | 10% | 5% | 3% | 1% | 0.5% | 3% |
| Comparative Example 4 | 10% | 30% | 3% | 1% | 0.5% | 3% |
| Comparative Example 5 | 10% | 10% | 0% | 1% | 0.5% | 3% |
| Comparative Example 6 | 10% | 10% | 5% | 1% | 0.5% | 3% |
| Comparative Example 7 | 10% | 10% | 3% | 0.5% | 0.5% | 3% |
| Comparative Example 8 | 10% | 10% | 3% | 1% | 1% | 3% |
| Comparative Example 9 | 10% | 10% | 3% | 0.8% | 0.5% | 6% |
| Comparative Example 10 | 30% | 0% | 3% | 0.8% | 1% | 3% |

**Table 2: Results of performance test of battery in Examples 1 to 7 and Comparative Examples 1 to 10**

| Group | DCR(Ω) | Cycle number of 90% discharge capacity at 45°C | Volume growth rate of 90% discharge capacity at 45°C |
|---|---|---|---|
| Example 1 | 93 | 511 | 12.1% |
| Example 2 | 96 | 456 | 2.4% |
| Example 3 | 94 | 503 | 14.8% |
| Example 4 | 91 | 476 | 3.5% |
| Example 5 | 91 | 489 | 10.2% |
| Example 6 | 93 | 498 | 14.7% |
| Example 7 | 95 | 527 | 8.5% |
| Comparative Example 1 | 99 | 271 | 0.3% |
| Comparative Example 2 | 92 | 475 | 28.8% |
| Comparative Example 3 | 97 | 467 | 15.4% |
| Comparative Example 4 | 91 | 420 | 9.5% |
| Comparative Example 5 | 92 | 337 | 66.0% |
| Comparative Example 6 | 97 | 497 | 20.9% |
| Comparative Example 7 | 93 | 461 | 17.1% |
| Comparative Example 8 | 93 | 472 | 9.5% |
| Comparative Example 9 | 96 | 444 | 9.8% |
| Comparative Example 10 | 97 | 426 | 43.7% |

Comparative Example 10 is an electrolyte solution applied to the high-nickel ternary positive electrode system of the battery in the industry. Comparing the test results of Example 1 with Comparative Example 10, the high-temperature cycle lifespan and high-temperature cycle gas generation of the battery provided by Example 1 are both superior to Comparative Example 10. It may be seen that the electrolyte solution of the disclosure has better superiority in the high energy density battery.

Comparing the test results of Examples 1, 2 and Comparative Examples 1, 2, it may be known that the content of the EC in the electrolyte has a significant impact on the cycle performance of the battery. When the content of the EC in the solvent is within the appropriate range of 2% to 10%, the oxidation resistance ability of the electrolyte at high temperature and high voltage may be enhanced, while the film-forming effect of the SEI film on the negative electrode surface is also ensured, thereby extending the cycle lifespan of the battery and suppressing the cycle gas generation of the battery. When the content of the EC in the solvent is higher than 10%, the oxidation resistance stability of the electrolyte may be reduced, which causes more side reactions in the positive electrode, and increases the gas generation in the charge-discharge cycle of the battery. When the content of the EC in the solvent is lower than 2%, the electrical conductivity of the electrolyte may be reduced, which affects the kinetic performance of the electrolyte, and increases the DCR of the battery. At the same time, the insufficient formation of the SEI film may develop on the negative electrode surface, causing solvent co-intercalation when the negative electrode is charged and discharged, and resulting in significant capacity decay during the charge-discharge cycle of the battery.

Comparing the test results of Examples 1, 3, 4 and Comparative Examples 3, 4, it may be known that when a sum of the contents of the PC and the FEC in the solvent is within the appropriate range of 10% to 30%, compensation may be effectively provided for the decrease in dielectric constant and electrical conductivity caused by reduced the content of the EC, which ensures that the lithium ion transport capacity of the electrolyte and the film-forming effect on the negative electrode interface do not deteriorate.

Moreover, comparing the test results, it may be seen that when the content of the PC in the solvent is within the appropriate range of 7% to 27%, negative impacts may not occur on the cycle lifespan and DCR of the battery. When the content of the PC in the solvent is less than 7%, the dielectric constant of the electrolyte decreases, the electrical conductivity decreases, and the DCR of the battery increases accordingly. When the content of the PC in the solvent is higher than 27%, excessive PC may undergo continuous reduction decomposition reactions with the graphite material of the negative electrode at a low voltage, which increases the risk of the electrolyte depriving the negative electrode active material, and results in decay of the cycle capacity of the battery.

Comparing the test results of Examples 1, 5 and Comparative Examples 5, 6, it may be known that when the content of the FEC in the solvent is within the appropriate range of 0.5% to 3%, the electrolyte may both ensure the protective effect of the electrolyte on the negative electrode interface and control the cycle gas generation of the battery. When the content of the FEC in the solvent is greater than 3%, excessive FEC easily decomposes at the high temperature to produce hydrogen fluoride, which causes the increase in the cycle gas generation of the battery. When the content of the FEC in the solvent is less than 0.5%, insufficient FEC may not function to form a film to protect the negative electrode, which easily causes the PC to intercalate into the carbon negative electrode active material, destroys the cycle stability of the battery, and results in decay of the cycle capacity of the battery.

Comparing the test results of Examples 1, 6 and Comparative Examples 7, 8, it may be known that the amount of the additives DTD and PS in the electrolyte may cause substantial impact on the cycle performance of the battery. When the content of the additive DTD in the electrolyte is too low (less than 0.8%), insufficient formation of the SEI film may develop on the negative electrode interface, which causes negative impacts on the cycle lifespan and gas generation of the battery. When the content of the additive PS in the electrolyte is too high (less than 0.5%), the high-temperature cycle gas generation may deteriorate in the battery.

Comparing the test results of Examples 1, 7 and Comparative Example 9, it may be known that the silicon material in the negative electrode active material has certain demand for the amount of the FEC. When there is more silicon material in the negative electrode, the volume expansion thereof in the cycle is significant, which requires a certain amount of the FEC in the electrolyte to continuously form the SEI film on the negative electrode active material interface, and avoids the excessively expanded negative electrode destroying the original SEI film on the interface to be exposed in the electrolyte. Thereby, the protection of the negative electrode may be achieved in the cycle of the battery. If the content of the silicon compound exceeds 5%, the protective effect of the electrolyte proposed by the disclosure on the negative electrode may no longer be significant.

## Claims

1. An electrolyte, comprising:
a lithium salt;
a solvent, comprising ethylene carbonate, propylene carbonate, fluorinated ethylene carbonate, and linear carbonate;
wherein, a mass percentage of the ethylene carbonate relative to the solvent is 2% to 10%, and a mass percentage of a sum of the propylene carbonate and the fluorinated ethylene carbonate relative to the solvent is 10% to 30%.

2. The electrolyte according to claim 1, wherein a mass percentage of the fluorinated ethylene carbonate relative to the solvent is 0.5% to 3%.

3. The electrolyte according to claim 1, wherein the electrolyte further comprises an additive, and the additive comprises 1,3-propane sultone and ethylene sulfate.

4. The electrolyte according to claim 3, wherein a mass percentage of the 1,3-propane sultone relative to the electrolyte is equal to or less than 0.5%, and a mass percentage of the ethylene sulfate relative to the electrolyte is equal to or greater than 0.8%.

5. The electrolyte according to claim 4, wherein the mass percentage of the ethylene sulfate relative to the electrolyte is 0.8% to 1%.

6. The electrolyte according to claim 1, wherein the linear carbonate comprises one or more of dimethyl carbonate, diethyl carbonate, or ethyl methyl carbonate.

7. A secondary battery, comprising a positive electrode sheet, a negative electrode sheet, a separator, and the electrolyte according to any one of claims 1 to 6.

8. The secondary battery according to claim 7, wherein an upper limit of a working voltage of the secondary battery is greater than or equal to 4.15V.

9. The secondary battery according to claim 7, wherein the negative electrode sheet comprises a negative electrode active material, the negative electrode active material comprises a silicon material, a mass percentage of the silicon material in the negative electrode active material is equal to or less than 5%, and in the electrolyte, the mass percentage of the fluorinated ethylene carbonate relative to the solvent is 0.5% to 3%.

10. The secondary battery according to claim 9, wherein the electrolyte further comprises an additive, the additive comprises 1,3-propane sultone and ethylene sulfate, the mass percentage of the 1,3-propane sultone relative to the electrolyte is equal to or less than 0.5%, and a mass percentage of the ethylene sulfate relative to the electrolyte is equal to or greater than 0.8%.
